# EUROPEAN PATENT SPECIFICATION

(11) **EP 4 450 389 B1**
(45) Date of publication and mention of the grant of the patent: **01.07.2026**
(21) Application number: 24168834.0
(22) Date of filing: 05.04.2024
(51) Int. Cl.: B64D 11/02, A47K 5/12, G08B 21/24

(54) **SYSTEMS AND METHODS FOR PREDICTING SYSTEM USE AND CALIBRATING THE PREDICTIONS**
SYSTEME UND VERFAHREN ZUR VORHERSAGE DER SYSTEMVERWENDUNG UND KALIBRIERUNG DER VORHERSAGE
SYSTÈMES ET PROCÉDÉS DE PRÉDICTION D'UTILISATION DE SYSTÈME ET D'ÉTALONNAGE DES PRÉDICTIONS

(30) Priority: 19.04.2023 IN 202341028561; 23.06.2023 US 202318340748
(43) Date of publication of application: 23.10.2024
(73) Proprietor: B/E Aerospace, Inc., Winston-Salem, NC 27105 (US)
(72) Inventor: VEERAYYA, Shivashankar Maddanimath, Bangalore (IN); SHRIKHANDE, Ashish, Bangalore (IN); TRIKANAD, Adwait Arun, Hillsboro, OR (US); KALORE, Pankaj, Lincolnshire, IL (US)
(74) Representative: Dehns

(56) References cited:
- EP-B2- 0 616 658
- US-A1- 2015 216 369

## Description

### CROSS-REFERENCE TO RELATED APPLICATIONS

This application claims priority to, and the benefit of, India Provisional Patent Application No. 202341028561, filed April 19, 2023 (DAS Code C67F) and titled "SYSTEMS AND METHODS FOR PREDICTING SYSTEM USE AND CALIBRATING THE PREDICTIONS."

### FIELD

The present disclosure generally relates to touchless lavatories, and more specifically, to monitoring and managing touchless lavatories.

### BACKGROUND

Sensors are being increasingly used in lavatories to control the operations of the various subsystems in touchless lavatories. A touchless lavatory in an aircraft may include various subsystems such as a faucet, a soap dispenser, a waste bin flap, a toilet seat, a toilet cover, a flush switch of the toilet, a UV light sanitizer, and a controller to open and close a door, among others. Some of these subsystems are replenished on a regular basis during use. For example, the soap dispenser and toilet paper, and the waste bin may be emptied when full. Typically, these actions are performed in response to a visual inspection or a complaint from a passenger. US 2015/0216369 A1 describes a hand cleaning station. EP 0 616 658 B2 describes a hand washing unit.

### SUMMARY

A method is defined in claim 1 including receiving, by a processor, a first sensor signal, retrieving, by the processor, a first dispense time for a faucet in response to the first sensor signal being a request for water from the faucet, activating, by the processor, the faucet to dispense water for the first dispense time, receiving, by the processor, a second sensor signal while the faucet is dispensing water, determining, by the processor, that the faucet is active in response to the second sensor signal being a request for soap from a soap dispenser, calculating, by the processor, a first frequency of the faucet being active when the second sensor signal is received, and decreasing, by the processor, the first dispense time in response to the first frequency being above a first threshold. The first frequency is a measurement of multiple requests as a percentage of total requests over a predetermined number of uses, and wherein the first threshold is about 70% of the predetermined number of uses being multiple requests.

In various embodiments, the method includes retrieving, by the processor, an amount of soap to dispense from the soap dispenser in response to the second sensor signal, activating, by the processor, the soap dispenser to dispense the amount of soap, receiving, by the processor, a third sensor signal indicating a request for soap from the soap dispenser, calculating, by the processor, a second frequency of multiple requests for soap to total requests for soap, and increasing, by the processor, the amount of soap to dispense in response to the second frequency being above a second threshold.

In various embodiments, multiple requests for soap includes a second request for soap being received within about 5 seconds of a first request for soap. In various embodiments, the second frequency is a measurement of a number of multiple requests for soap as a percentage of total requests for soap over a predetermined number of uses, and wherein the second threshold is about 70% of the predetermined number of uses.

In various embodiments, the method includes receiving, by the processor, a fourth sensor signal indicating a request for water, the fourth sensor signal received after the second sensor signal, retrieving, by the processor, a second dispense time for the faucet, activating, by the processor, the faucet to dispense water for the second dispense time, receiving, by the processor, a fifth sensor signal indicating a request for water, the fifth sensor signal received after the fourth sensor signal, calculating, by the processor, a third frequency of multiple requests for water in response to the fifth sensor signal being within a time threshold of the fourth sensor signal, and increasing, by the processor, the second dispense time in response to the third frequency being above a third threshold. In various embodiments, the second dispense time is greater than the first dispense time.

Also disclosed herein as an example and not forming part of the claimed subject-matter is a method including determining, by a processor, a number of uses available in a system in a touchless lavatory, receiving, by the processor, a first trigger to use the system, decrementing, by the processor, the number of uses in response to the first trigger, and sending, by the processor, a warning in response to the number of uses being below a threshold.

In various embodiments, the determining the number of uses includes retrieving, by the processor, a supply count, retrieving, by the processor, a prediction, and calculating, by the processor, the number of uses based on the supply count and the prediction. In various embodiments, the system is a touchless soap dispenser and the number of uses is based on an amount of soap in the soap dispenser and an amount soap dispensed at one time by the soap dispenser. In various embodiments, the system is a touchless waste bin and the number is uses is based on an estimated volume of waste each time the touchless waste bin is activated.

In various embodiments, the system is a touchless toilet and the number of uses is based on an estimated amount of toilet paper used. In various embodiments, the method further includes receiving, by the processor, a second trigger for the system, determining, by the processor, the second trigger is within a first time period of the first trigger, and skipping, by the processor, the decrementing the number of uses in response to the first time period being below a time threshold. In various embodiments, the threshold is about 5 seconds to about 10 seconds.

Also disclosed herein as an example and not forming part of the claimed subject-matter is a system in a touchless lavatory. The system includes a motor, a sensor, a consumable, a processor coupled to the motor and the sensor, and a memory operatively coupled to the processor. The memory includes instructions stored thereon that, when executed by the processor, cause the processor to receive a signal from the sensor, operate the motor in response to the signal, track the use of the consumable, and send a warning in response to a prediction that the consumable is close to depleted.

In various embodiments, the instructions, when executed by the processor, further cause the processor to receive a first feedback status indicating that the warning is early, late, or accurate and update the prediction a first amount in response to the first feedback status. In various embodiments, the instructions, when executed by the processor, further cause the processor to receive a second feedback status requesting a major update to the prediction and update the prediction a second amount in response to the second feedback status, the second amount being greater than the first amount.

In various embodiments, the prediction is increased by about 10% to about 20% in response to the first feedback status indicating the warning is early and the prediction is decreased by about 5% to about 15% in response to the first feedback status indicating the warning is late. In various embodiments, the prediction is increased by about 2% to about 10% in response to the first feedback status indicating the warning is early and the prediction is decreased by about 2% to about 10% in response to the first feedback status indicating the warning is late. In various embodiments, the system further includes a user interface configured to display the warning.

The foregoing features and elements may be combined in any combination, without exclusivity, unless expressly indicated herein otherwise, the protection being limited exclusively by the claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate perspective views of a touchless lavatory and sensors, according to various exemplary embodiments of the present disclosure, not part of the claimed subject-matter. The same applies for all the exemplary embodiments below.
FIG. 2 illustrates a system architecture for monitoring sensors and use in a touchless lavatory, according to various exemplary embodiments of the present disclosure
FIG. 3 illustrates a flow diagram for determining an amount of soap to dispense, in accordance with various exemplary embodiments.
FIG. 4 illustrates a flow diagram for determining an amount of water to dispense from a faucet, in accordance with various embodiments.
FIG. 5 illustrates a flow diagram for determining an amount of water to dispense from a faucet, in accordance with various embodiments.
FIG. 6 illustrates a flow diagram for calculating a prediction for use of consumables in a touchless lavatory, in accordance with various exemplary embodiments.
FIG. 7 illustrates a flow diagram for monitoring use of consumables in a touchless lavatory, in accordance with various exemplary embodiments.
FIG. 8 illustrates a flow diagram for monitoring use of consumables in a touchless lavatory, in accordance with various exemplary embodiments.
FIG. 9 illustrates a flow diagram for providing feedback to a prediction system, in accordance with various exemplary embodiments.
FIG. 10 illustrates a flow diagram for correcting predictions for refilling lavatory consumables, in accordance with various exemplary embodiments.
FIG. 11 illustrates a user interface for displaying status and warnings for a touchless lavatory, in accordance with various exemplary embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure, insofar as they fall within the scope of the claims. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems and methods for predicting aircraft lavatory use, calibrating the predictions, and providing alerts to perform an action based on the predictions. The aircraft lavatory may include a soap dispenser subsystem, a waste bin flap subsystem, a toilet lid subsystem, a toilet seat subsystem, and a faucet subsystem, among others. In various embodiments, subsystems within an aircraft lavatory include each include a microcontroller and a sensor. In various embodiments, the aircraft lavatory may include a central controller that is operatively coupled to each subsystem and configured to communicate with each subsystem. In various embodiments, the central controller is configured to receive use data from each subsystem and send an alert to perform an action based on the received data. In various embodiments, the central controller may predict an amount of a consumable (e.g., soap, water, toilet paper, etc.) used by a subsystem for a given use. In various embodiments, the central controller may send the alert based at least in part on the prediction for one of the subsystems. In various embodiments, the central controller may receive an input from a crew member indicating that the prediction was early, late, and/or inaccurate.

Benefits of the system and methods disclosed herein will become apparent as described below. In various embodiments, benefits may include reducing water and/or soap waste. In various embodiments, benefits may include increasing crew productivity and/or decreasing passenger complaints by preemptively restocking consumables and/or emptying the waste bin. In various embodiments, benefits may include reduced turnaround time by timely replacing consumables and/or lavatory components parts before they fail.

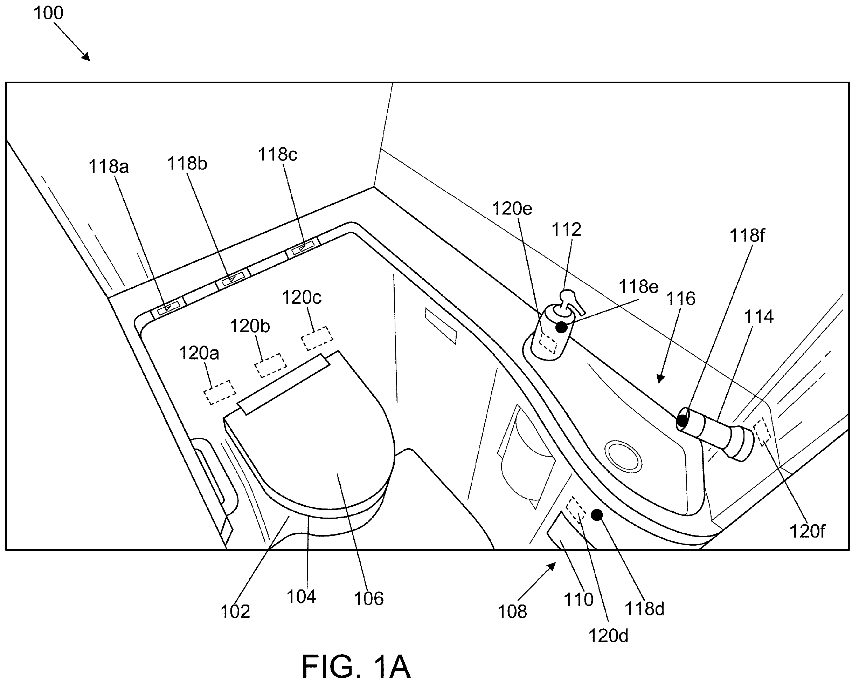

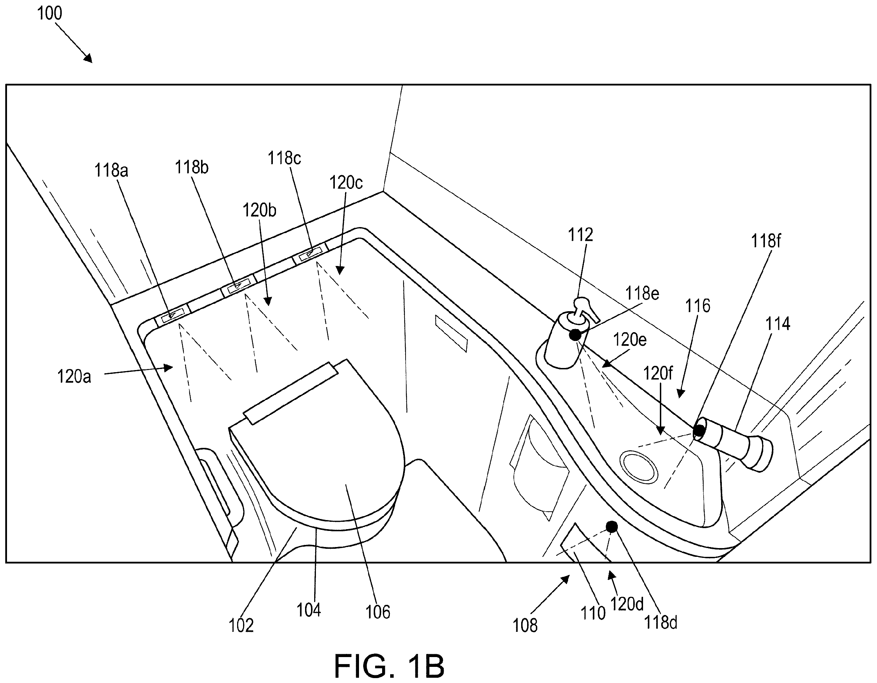

Referring now to FIGS. 1A and 1B, a touchless lavatory 100 is illustrated, in accordance with various exemplary embodiments. Touchless lavatory 100 may be implemented in a variety of locations including an aircraft, a train, and an office building. Touchless lavatory 100 includes components such as a toilet 102 having a cover 104 and a seat 106, a trash can 108 with a flap 110, a soap dispenser 112, a faucet 114, and a sink 116. The cover 104 moves up and down in order to use the toilet 102 in a seated position. The cover 104 and seat 106 moves up and down in order to use the toilet 102 in a standing position. The flap 110 moves in and out to allow for disposal of garbage into trash can 108. Motors, or actuators, are located within the touchless lavatory to operate each of the toilet 102, cover 104, seat 106, flap 110, soap dispenser 112, and faucet 114. The motors are located near or within the component which the motor controls.

Touchless lavatory 100 further includes a number of sensors 118a-118f and a number of motors 120a-120f. Each of the sensors 118a-118f is associated with a component and the associated motor 120a-120f within touchless lavatory 100. For example, sensor 118a may be associated the toilet 102 and motor 120a, and more specifically with flushing the toilet 102; sensor 118b may be associated with the cover 104 and motor 120b; sensor 118c may be associated with the seat 106 and motor 120c; sensor 118d may be associated with the flap 110 and motor 120d; sensor 118e may be associated with the soap dispenser 112 and motor 120e; and sensor 118f may be associated with the faucet 114 and motor 120f. Each sensor 118a-118f may include an ambient light sensor and a proximity sensor. The ambient light sensor detects the amount of light reaching the sensor 118a-118f. The proximity sensor detects how close an object is to the sensor 118a-118f and/or movement near the sensor 118a-118f. For example, sensor 118a sends a value(s) to a processor in response to detecting movement, such as via its proximity sensor, and the processor commands the motor associated with toilet 102 to activate, thereby flushing the toilet 102. Similarly, sensor 118b sends a value(s) to a processor in response to detecting movement, such as via its proximity sensor, and the processer commands the motor associated with cover 104 to raise or lower cover 104. Likewise, sensor 118c sends a value(s) to a processor in response to detecting movement, such as via its proximity sensor, and the processor commands the motor associated with seat 106 to activate to raise or lower seat 106. Similarly, sensor 118d sends a value(s) to a processor in response to detecting movement, such as via its proximity sensor, and the processor commands the motor associated with flap 110 to open or close flap 110. Likewise, sensor 118e sends a value(s) to a processor in response to detecting movement, such as via its proximity sensor, and the processor commands the motor associated with the soap dispenser 112 to activate and dispense soap. Similarly, sensor 118f sends a value(s) to a processor in response to detecting movement, such as via its proximity sensor, and the processor commands the motor associated with faucet 114 to turn on faucet 114 allowing water to flow into sink 116.

Referring now to FIG. 1B, sensing areas 120a-120f of the sensors 118a-118f are illustrated with respect to the touchless lavatory 100, in accordance with various exemplary embodiments The sensing area 120a-120f, also referred to as a cone, indicates the area of proximity detection for each of the sensors 118a-118f. Such that sensing area 120a depicts the area of proximity detection of sensor 118a; sensing area 120b depicts the area of proximity detection of sensor 118b; sensing area 120c depicts the area of proximity detection of sensor 118c; sensing area 120d depicts the area of proximity detection of sensor 118d; sensing area 120e depicts the area of proximity detection of sensor 118e; and sensing area 120f depicts the area of proximity detection of sensor 118f. According to various embodiments, the sensors 118a-118f may be configured to increase or decrease the sensitivity of sensors 118a-118f thereby increasing or decreasing the sensing areas 120a-120f in a horizontal and/or a vertical plane. In various embodiments the sensitivity of the sensors may be set between about 1 cm (about 0.4 inches) to about 25 cm (about 9.9 inches), between about 3 cm (about 1.2 inches) and about 15 cm (about 5.9 inches), and between about 5 cm (about 1.9 inches) and about 10 cm (about 3.9 inches). The sensitivity may depend on proximity to other sensors and/or components within the touchless lavatory 100.

The depicted configurations of the components (e.g., toilet 102, cover 104, seat 106, flap 110, soap dispenser 112, and faucet 114) and sensors 118a-118f for illustrative and discussion purposes only and are not meant to be limiting. While the disclosure refers to the touchless lavatory 100 as depicted in the depicted arrangement of FIGS. 1A and 1B, the disclosure nevertheless contemplates different arrangements and configurations of the components and sensors of the touchless lavatory 100.

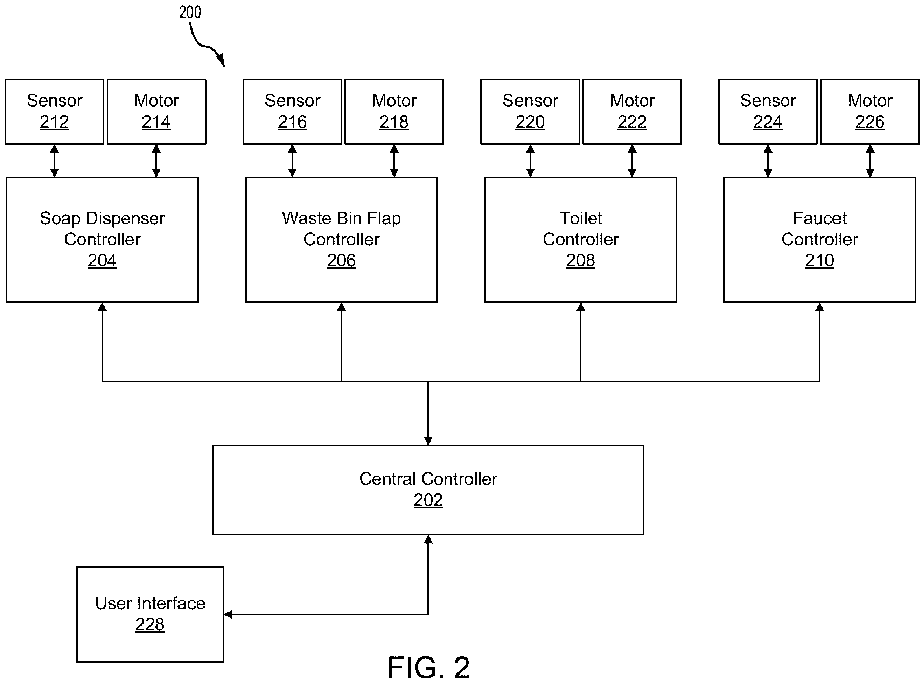

Referring now to FIG. 2, a system 200 for monitoring sensors (e.g., sensors 118a-118f) and activating motors illustrated is, in accordance with various exemplary embodiments. System 200 includes a central controller 202, a soap dispenser controller 204, a waste bin flap controller 206, a toilet controller 208, a faucet controller 210, a soap dispenser sensor 212, a soap dispenser motor 214, a waste bin sensor 216, a waste bin motor 218, a toilet sensor 220, a toilet motor 222, a faucet sensor 224, and a faucet motor 226. In various embodiments, toilet controller 208 may include separate controllers to control a toilet cover (e.g., toilet cover 104), a toilet seat (e.g., toilet seat 106), and a toilet flush action (e.g., toilet 102). In various embodiments, toilet sensor 216 may include separate sensors for the toilet lid (e.g., sensor 118b), the toilet seat (e.g., sensor 118c), and the toilet flush (e.g., sensor 118a). In various embodiments, system 200 may optionally include a user interface 228.

Central controller 202 and controllers 204, 206, 208, 210 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete gate or transistor logic, discrete hardware components, or any combination thereof.

Central controller 202 and controllers 204, 206, 208, 210 may include memory to store executable instructions and data to implement control logic of central controller 202 and controllers 204, 206, 208, 210. The memory of central controller 202 and/or controllers 204, 206, 208, 210 may comprise a tangible, non-transitory storage medium and may store data used, for example, for lookup tables and sensor distance information.

Motors 214, 218, 222, 226 are connected to their respective controllers 204, 206, 208, 210. In various embodiments, motors 214, 218, 222, 226 may be actuators that are configured to perform an action (e.g., release soap, flush the toilet, etc.) Motors 214, 218, 222, 226 may be activated and deactivated by their respective controllers 204, 206, 208, 210. Motors 214, 218, 222, 226 may be operatively coupled to components in the aircraft lavatory (e.g., touchless lavatory 100) and may be configured to move each respective component in response to being activated by their respective controllers 204, 206, 208, 210. Motors 214, 218, 222, 226 may be examples of motors 120a-120f described above in FIGS. 1A and 1B.

Sensors 212, 216, 220, 224 may comprise one or more sensors including an ambient light, a proximity sensor, and/or a motion sensor, among others. Sensors 212, 216, 220, 224 may be operatively coupled to their respective controllers 204, 206, 208, 210 and configured to communicate sensor data to their respective controllers 204, 206, 208, 210. Each controller 204, 206, 208, 210 may communicate sensor data to central controller 202.

In various exemplary embodiments, central controller 202 may receive data from controllers 204, 206, 208, 210 and sends instructions to controllers 204, 206, 208, 210. Data may include proximity data, ambient light data, location information, motion information, etc. Instructions may include commands to activate or deactivate one of the motors 214, 218, 222, 226.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

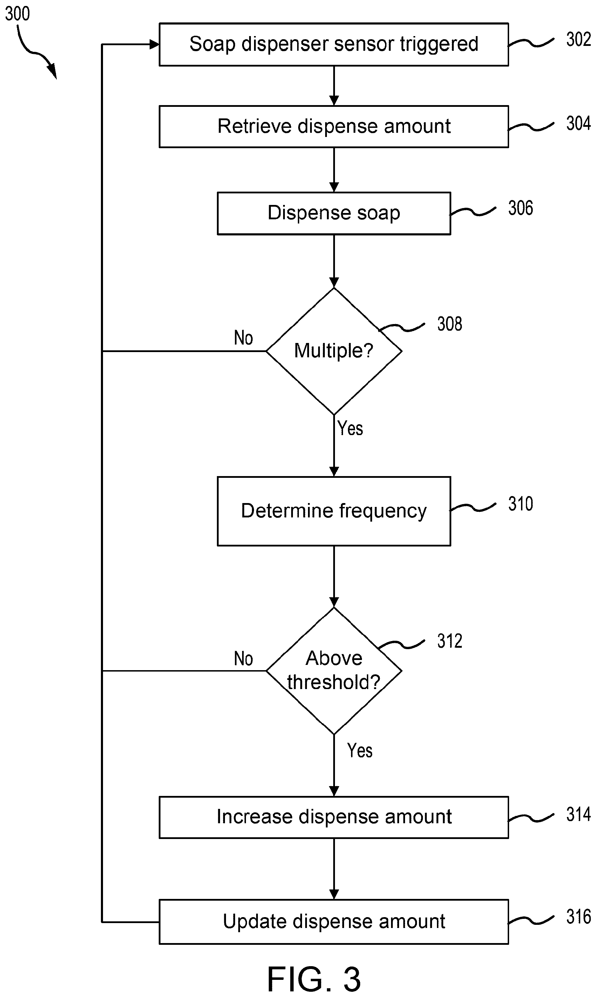

Referring now to FIG. 3, a method 300 for determining an amount of soap to dispense by a soap dispenser is illustrated, in accordance with various exemplary embodiments. In various embodiments, the soap dispenser may be soap dispenser 112 including sensor 118e described above in FIGS. 1A and 1B. In various embodiments, the soap dispenser may be operated by a motor or actuator, such as motor 214 described above in FIG. 2. In various embodiments, method 300 may be performed by central controller 202 described above in FIG. 2. In various, embodiments, method 300 may be performed by soap dispenser controller 204 described above in FIG. 2. Method 300 may include more or fewer steps than those illustrated in FIG. 3. For simplicity, FIG. 3 will be described as being performed by soap dispenser controller 204, though it should be understood that method 300 may be performed by another controller or system.

At block 302, controller 204 receives an indication that the soap dispenser sensor is triggered. In various embodiments, the soap dispenser (e.g., soap dispenser 112) sensor (e.g., sensor 118e) may be triggered by motion near the sensor, proximity to the sensor, or a light level at the sensor, among others.

At block 304, controller 204 retrieves data related to a dispense amount. In various embodiments, the data may represent an amount of time to operate a motor or fixture (e.g., soap dispenser, faucet, etc.). In various embodiments, the data may represent an amount to dispense (e.g., an amount of water, an amount of soap, etc.). In various embodiments, the data may be stored locally on controller 204. In various embodiments, the dispense amount may be stored on a connected controller (e.g., central controller 202) or on a connected storage.

At block 306, controller 204 sends instructions to motor 214 to activate to dispense the soap dispenser based on the retrieve data. In various embodiments, motor 214 may be configured to dispense soap from soap dispenser 112 for a period of time. In various embodiments, the amount of time may be about 100 ms to about 1 second, and more specifically about 250 ms to about 750 ms. In various embodiments, motor 214 may be configured to dispense an amount of soap from soap dispenser 112, such as for example, about 0.1 ml to about 1.5 ml, and more specifically, about 0.5 ml to about 0.9 ml.

At decision block 308, controller 204 determines whether soap dispenser 112 was triggered multiple times in a predetermined interval. If it is determined that soap dispenser 112 was not triggered multiple times in the predetermined interval, then method 300 returns to block 302. If instead, it is determined that soap dispenser 112 was triggered multiple times in the predetermined interval, method 300 proceeds to block 310.

At block 310 controller 204 determines a frequency of triggering of soap dispenser 112. In various embodiments, controller 204 may record a time value for each time that soap dispenser 112 is triggered. In various embodiments, controller 204 may maintain a time value for the previous time that soap dispenser 112 was triggered. In various embodiments, the frequency may be a predetermined threshold. In various embodiments, the predetermined threshold be about 1 second to about 5 seconds, and more specifically, about 2 seconds to about 3 seconds.

At decision block 312, controller 204 determines whether the frequency of triggering soap dispenser 112 is above the predetermined threshold. If it is determined that the frequency of triggering soap dispenser 112 is not above the predetermined threshold, method 300 returns to block 302. If instead, it is determined that the frequency of triggering soap dispenser 112 is above the predetermined threshold, method 300 proceeds to block 314.

At block 314, controller 204 increases the dispense amount in response to the frequency of triggering soap dispenser 112 being above the predetermined threshold. The soap dispense amount may be increased by a predetermined scalar value. In various embodiments, the predetermined scalar value may be about 0.01 to about 0.15, and more specifically, about 0.05 to about 0.1. The soap dispenser amount may be multiplied by one plus the predetermined scalar value (e.g., 1.1).

At block 316, controller 204 updates the dispense amount to the new increased amount. In various embodiments, the updated amount may be presented to a user interface (e.g., user interface 228) for a user to view and/or confirm. Method 300 then returns to block 302.

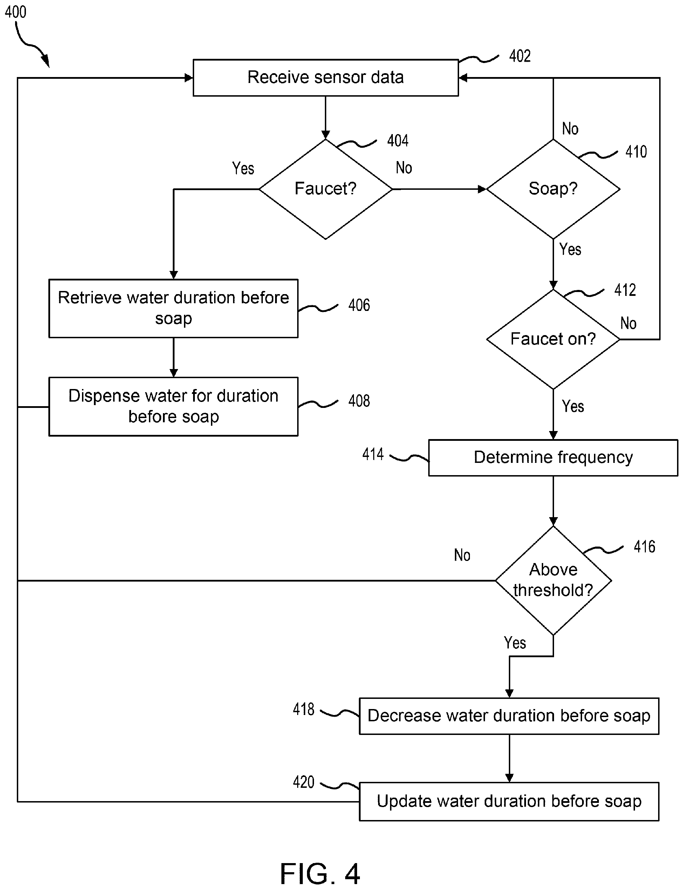

Referring now to FIG. 4, a method 400 for determining an amount of water to dispense from a faucet before dispensing soap from a soap dispenser is illustrated, in accordance with the claimed subject-matter. In various embodiments, the faucet may be faucet 114 including sensor 118f described above in FIGS. 1A and 1B. In various embodiments, the soap dispenser may be soap dispenser 112 including sensor 118e described above in FIGS. 1A and 1B. In various embodiments, the faucet may be operated by a motor or actuator, such as motor 226 described above in FIG. 2. In various embodiments, method 400 may be performed by central controller 202 described above in FIG. 2. In various, embodiments, method 400 may be performed by faucet controller 210 described above in FIG. 2. Method 400 may include more or fewer steps than those illustrated in FIG. 4. For simplicity, FIG. 4 will be described as being performed by faucet controller 210, with faucet controller 210 being in communication with soap dispenser controller 204, though it should be understood that method 400 may be performed by another controller or system.

At block 402, controller 210 receives sensor data. The sensor data may be an indication that the faucet sensor is triggered and/or an indication that the soap dispenser sensor is triggered. In various embodiments, the faucet (e.g., faucet 114) sensor (e.g., sensor 118f) and/or the soap dispenser (e.g., soap dispenser 112) sensor (e.g., sensor 118e) may be triggered by motion near the sensor, proximity to the sensor, or a light level at the sensor, among others.

At decision block 404, controller 210 determines whether the sensor data indicates the faucet sensor is triggered. If it is determined that the faucet sensor is triggered, method 400 proceeds to block 406.

At block 406, controller 210 retrieves a first water dispense duration associated with the use of the faucet before using the soap dispenser. In various embodiments, the first water dispense duration may be stored locally on controller 210. In various embodiments, the first water dispense duration may be stored on a connected controller (e.g., central controller 202) or on a connected storage.

At block 408, controller 210 sends instructions to motor 226 to activate the faucet. In various embodiments, motor 226 may be configured to dispense water from faucet 114 for the first water dispense duration, or period of time. In various embodiments, the first water dispense duration may be about 2 seconds to about 5 seconds, and more specifically about 3 seconds to about 4 seconds. Method 400 then returns to block 402 to receive sensor data.

Returning to decision block 404, if instead, it is determined that the faucet sensor is not triggered, method 400 proceeds to decision block 410.

At decision block 410, controller 210 determines whether the sensor data indicates the soap dispenser sensor is triggered. If it is determined that the soap dispenser sensor is not triggered, method 400 returns to block 402. If instead, it is determined that the soap dispenser sensor is triggered, method 400 proceeds to decision block 412.

At decision block 412, controller 210 determines whether the faucet is currently on, or running. Typically, a user uses less water to wet their hands prior to dispensing soap that the water used to rinse off the soap. Therefore, it is prudent to use less water (i.e., run the faucet for less time) before dispensing soap that after dispensing soap. This reduces water use and, in various embodiments, allow for less water to be carried on the aircraft. If it is determined that the faucet is not currently on, or running, method 400 returns to block 402 to receive sensor data. This condition indicates that the amount of water dispensed by the faucet is sufficient for wetting hands before dispensing soap. If instead, it is determined that the faucet is on, or running, method 400 proceeds to block 414. This condition indicates that the amount of water dispensed by the faucet is more than used by that user to wet hands before dispensing soap.

At block 414, controller 210 determines a frequency of triggering faucet 114. In various embodiments, controller 210 may record a first count of the number of times that soap dispenser 112 is triggered and a second count of the number of times that soap dispenser 112 is triggered while faucet 114 is running. In various embodiments, the first count and the second count may be rolling counts, such that the first count and the second count store about 50 to about 100 operations, or triggers of faucet 114.

At decision block 416, controller 210 determines whether the second count is above a frequency threshold. The frequency threshold may be represented as a percentage of the first count with respect to the second count. That is, the percentage of times that the soap dispenser 112 is triggered while faucet 114 is running. In various embodiments, the frequency threshold may be about 50% to about 80%, and more specifically, about 60% to about 70%. If it is determined that the frequency is below the frequency threshold, method 400 returns to block 402. If instead, it is determined that the frequency is above the frequency threshold, method 400 proceeds to block 418.

At block 418, controller 210 decreases the first water dispense duration. The first water dispense duration may be decreased by a predetermined scalar value. In various embodiments, the predetermined scalar value may be about 0.01 to about 0.05. The first water dispense duration may be divided by one plus the predetermined scalar value (e.g., 1.01).

At block 420, controller 210 updates the first water dispense duration the the new decreased amount. In various embodiments, the updated amount may be presented to a user interface (e.g., user interface 228) for a user to view and/or confirm. Method 400 then returns to block 402.

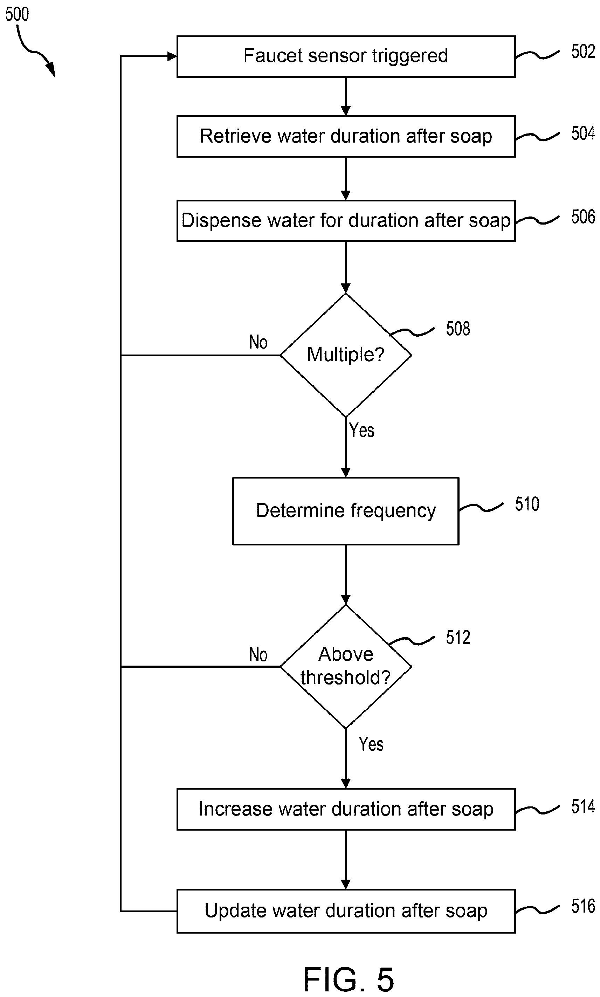

Referring now to FIG. 5, a method 500 for determining an amount of water to dispense from a faucet after dispensing soap from a soap dispenser is illustrated, in accordance with the claimed subject-matter. In various embodiments, the faucet may be faucet 114 including sensor 118f described above in FIGS. 1A and 1B. In various embodiments, the soap dispenser may be soap dispenser 112 including sensor 118e described above in FIGS. 1A and 1B. In various embodiments, the faucet may be operated by a motor or actuator, such as motor 226 described above in FIG. 2. In various embodiments, method 500 may be performed by central controller 202 described above in FIG. 2. In various, embodiments, method 500 may be performed by faucet controller 210 described above in FIG. 2. Method 500 may include more or fewer steps than those illustrated in FIG. 5. For simplicity, FIG. 5 will be described as being performed by faucet controller 210, with faucet controller 210 being in communication with soap dispenser controller 204, though it should be understood that method 500 may be performed by another controller or system.

At block 502, controller 210 receives sensor data from the faucet, and more specifically, from the faucet sensor 224. The sensor data may be an indication that the faucet sensor is triggered. In various embodiments, the faucet (e.g., faucet 114) sensor (e.g., sensor 118f) may be triggered by motion near the sensor, proximity to the sensor, or a light level at the sensor, among others.

At block 504, controller 210 retrieves a second water dispense duration associated with the use of the faucet after using the soap dispenser. In various embodiments, the second water dispense duration may be stored locally on controller 210. In various embodiments, the second water dispense duration may be stored on a connected controller (e.g., central controller 202) or on a connected storage.

At block 506, controller 210 sends instructions to motor 226 to activate the faucet. In various embodiments, motor 226 may be configured to dispense water from faucet 114 for the second water dispense duration, or period of time. In various embodiments, the second water dispense duration may be about 4 seconds to about 10seconds, and more specifically about 6 seconds to about 8 seconds.

At decision block 508, controller 210 determines whether faucet 114 was triggered multiple times. If it is determined that faucet 114 was not triggered multiple times, then method 500 returns to block 502. If instead, it is determined that faucet 114 was triggered multiple times, method 500 proceeds to block 510.

At block 510 controller 210 determines a frequency of triggering of faucet 114. In various embodiments, controller 210 may record a time value for each time that faucet 114 is triggered. In various embodiments, controller 210 may maintain a time value for the previous time that faucet 114 was triggered. In various embodiments, the frequency may be a predetermined threshold of about 2 second to about 8 seconds, and more specifically, about 3 seconds to about 5 seconds. In various embodiments, the predetermined threshold may be about 2 seconds longer than the second water dispense duration. In various embodiments, controller 210 may record a first count associated with the number of times that faucet 114 is triggered and a second count associated with the number of times that faucet 114 is triggered multiple times.

At decision block 512, controller 210 determines whether the frequency of triggering faucet 114 is above the predetermined threshold. If it is determined that the frequency of triggering faucet 114 is not above the predetermined threshold, method 500 returns to block 502. If instead, it is determined that the frequency of triggering faucet 114 is above the predetermined threshold, method 500 proceeds to block 514.

At block 514, controller 210 increases the second water dispense amount in response to the frequency of triggering faucet 114 being above the predetermined threshold. The second water dispense amount may be increased by a predetermined scalar value. In various embodiments, the predetermined scalar value may be about 0.01 to about 0.15, and more specifically, about 0.05 to about 0.1. The second water dispense amount may be multiplied by one plus the predetermined scalar value (e.g., 1.1).

At block 516, controller 210 updates the second water dispense amount to the new increased amount. In various embodiments, the updated second water dispense amount may be presented to a user interface (e.g., user interface 228) for a user to view and/or confirm. Method 500 then returns to block 502.

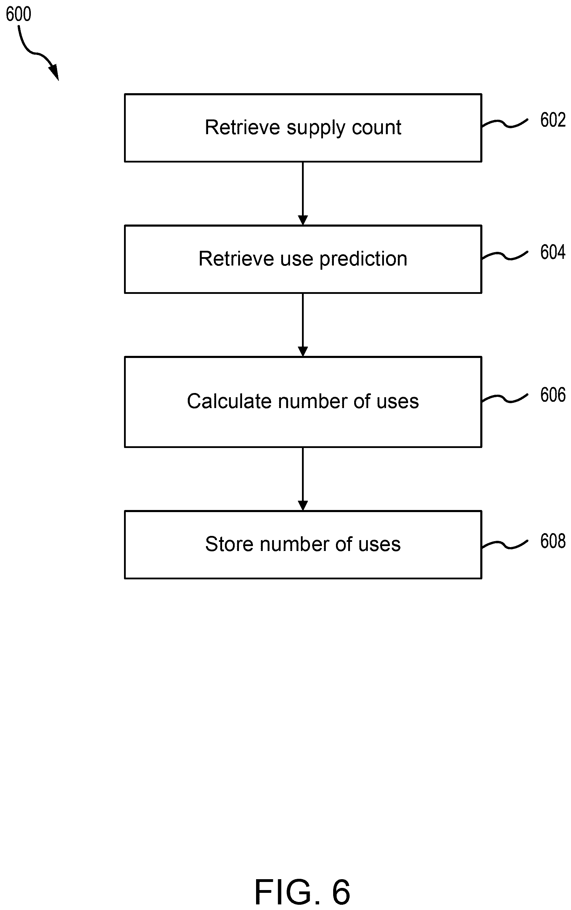

Referring now to FIG. 6, a method 600 for calculating a prediction for use of consumables in a touchless lavatory is illustrated, in accordance with various exemplary embodiments. In various embodiments, method 600 may be performed by central controller 202 described above in FIG. 2. In various embodiments, method 600 may be performed by one or more of soap dispenser controller 204, waste bin flap controller 206, toilet controller 208, and/or faucet controller 210 described above in FIG. 2. In various embodiments, method 600 may be performed by an external processor and the results stored one or more of central controller 202, soap dispenser controller 204, waste bin flap controller 206, toilet controller 208, and/or faucet controller 210. In various embodiments, method 600 may be performed before installation of a touchless lavatory. In various embodiments, method 600 may be performed as part of the installation of the touchless lavatory.

At block 602, controller 202 retrieves a supply count. In various embodiments, the supply count may be a volume of a soap container used with soap dispenser. In various embodiments, the supply count may be a waste bin volume. In various embodiments, the supply count may be a number of sheets on a toilet paper roll and/or a number of disposable toilet seat covers. In various embodiments, the supply count may relate to other aspects of the touchless lavatory such as the faucet, a hand sanitizer dispenser, or a paper towel count, among others.

At block 604, controller 202 retrieves a use prediction. In various embodiments, the use prediction may be an amount of soap dispensed each time the soap dispenser is activated. In various embodiments, the use prediction may be an estimated volume of waste (e.g., crumpled paper towel, tissue, etc.) placed in the waste bin in each use. In various embodiments, the use prediction may be an amount of toilet paper (e.g., 3 lengths of toilet paper) used with each flush and/or a number of toilet covers used for each use of the toilet. In various embodiments, the use prediction may relate to other devices and/or aspects of the touchless lavatory. In various embodiments, the use prediction may be the result of one of methods 300, 400, and/or 500 described above.

At block 606, controller 202 calculates a number of uses. In various embodiments, the number of uses may be a number of soap dispenses until the soap dispenser is empty. In various embodiments, the number of uses may be the number of times waste bin flap is activated until the waste bin is full. In various embodiments, the number of uses may be the number of flushes of the toilet until the toilet paper is all used and/or the toilet covers are all used.

At block 608, controller 202 stores the number of uses. The number of uses may be stored locally on controller 202 or on the respective controller for the lavatory system, soap dispenser controller 204, waste bin flap controller 206, toilet controller 208, and/or faucet controller 210. Additionally, or in the alternative, the number of uses may be stored remote to the touchless lavatory such as on a central aircraft server or a remote server.

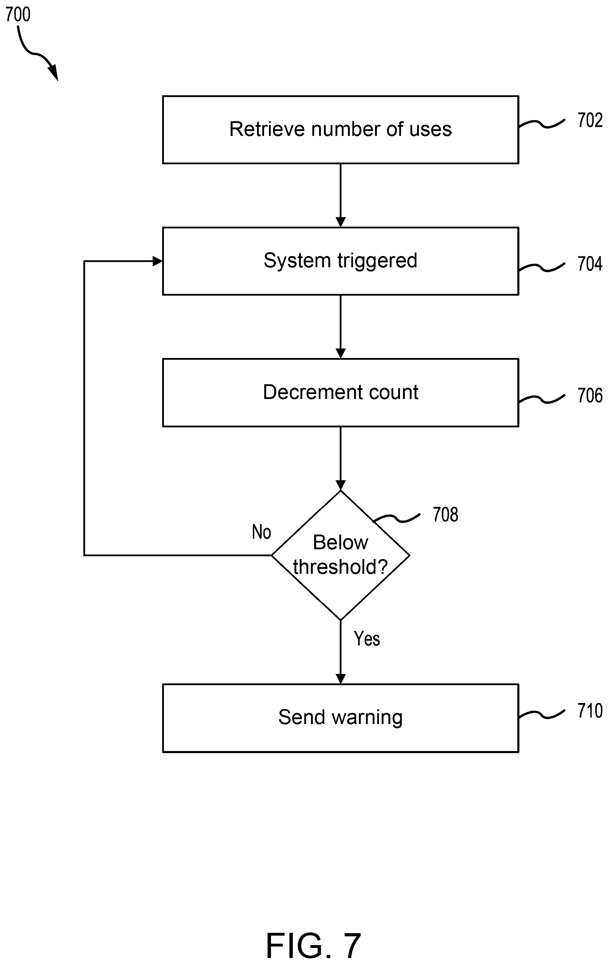

Referring now to FIG. 7, a method 700 of monitoring use of consumables in a touchless lavatory is illustrated, in accordance with various exemplary embodiments. In various embodiments, method 700 may be performed by central controller 202 described above in FIG. 2. In various embodiments, method 700 may be performed by one or more of soap dispenser controller 204, waste bin flap controller 206, toilet controller 208, and/or faucet controller 210 described above in FIG. 2. In various embodiments, method 700 may be performed by an external processor and the results stored one or more of central controller 202, soap dispenser controller 204, waste bin flap controller 206, toilet controller 208, and/or faucet controller 210. In various embodiments, method 700 may be performed before installation of a touchless lavatory. In various embodiments, method 700 may be performed as part of the installation of the touchless lavatory.

At block 702, controller 202 retrieves the number of uses for a touchless lavatory system. In various embodiments, the touchless lavatory system may be a soap dispenser, a faucet, a toilet, or a waste bin, among others. In various embodiments, the number of uses may be retrieved by performing the steps of method 600 described above in FIG. 6.

At block 704, controller 202 receives a system trigger for one of the touchless lavatory systems. In various embodiments, the operation of the touchless lavatory system may be performed as previously described. Controller 202 identifies the specific touchless lavatory system that is triggered.

At block 706, controller 202 decrements the use count for the identified touchless lavatory system. In various embodiments, the use count may be stored on controller 202. In various embodiments, the use count may be stored on one or more of soap dispenser controller 204, waste bin flap controller 206, toilet controller 208, and/or faucet controller 210.

At decision block 708, controller 202 determines whether the use count is below a lower threshold. The lower threshold indicates a low number of uses remaining and that the touchless lavatory system is to be refilled. In various embodiments, the lower threshold may be different for each touchless lavatory system. If it is determined that the use count is above the lower threshold, method 700 returns to block 704. If instead, it is determined that the use count is below the lower threshold, method 700 proceeds to block 710.

At block 710, controller 202 sends a warning to cabin crew. In various embodiments, the warning provides an indication that the touchless lavatory system is ready to be refilled. In various embodiments, the warning may be presented as a light or a message send to a computer system. In various embodiments, controller 202 may continue to send the warning after each additional use until the system is reset, as described below.

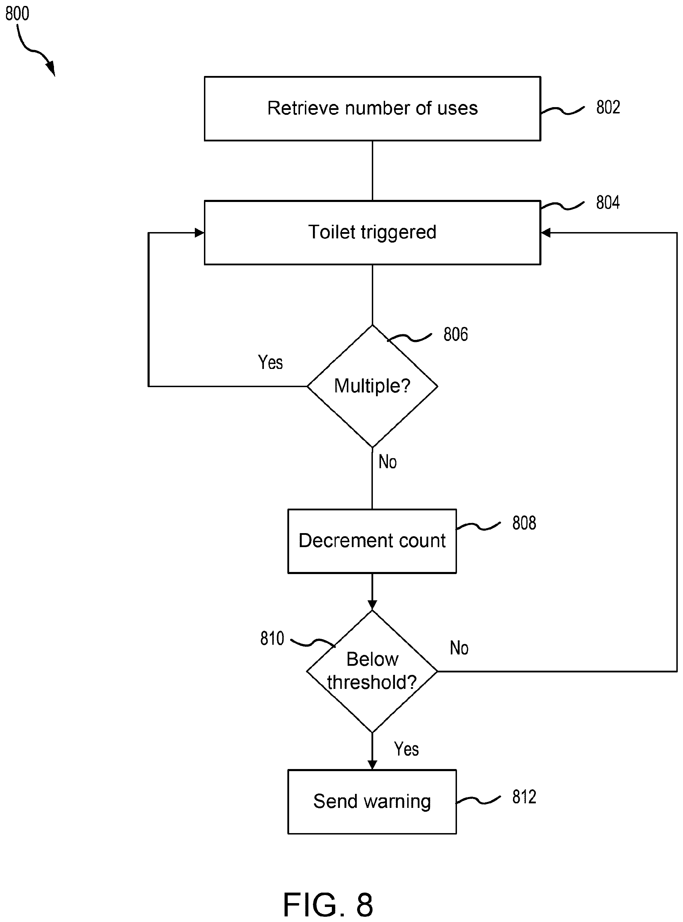

Referring now to FIG. 8, a method 800 for monitoring use of consumables in a touchless lavatory is illustrated, in accordance with various exemplary embodiments. In various embodiments, method 800 may be performed by central controller 202 described above in FIG. 2. In various embodiments, method 800 may be performed by one or more of soap dispenser controller 204, waste bin flap controller 206, toilet controller 208, and/or faucet controller 210 described above in FIG. 2.

At block 802, controller 202 retrieves the number of uses for a toilet (e.g., toilet 102) in a touchless lavatory. In various embodiments, the number of uses may be retrieved by performing the steps of method 600 described above in FIG. 6. In various embodiments, the number of uses may be representative of toilet paper use and/or toilet seat cover use.

At block 804, controller 202 receives an indication that the toilet flush is triggered. In various embodiments, the operation of the toilet flush may be performed as previously described.

At decision block 806, controller 202 determines whether the trigger to flush the toilet is included in multiple flushes during a short time period. This may be, for example, flushing the toilet multiple times without using more toilet paper and/or toilet seat covers. In various embodiments, controller 202 may start a countdown timer of about 10 seconds to about 30 seconds to determine whether there are multiple flushes. In various embodiments, controller 202 may record time stamps of each toilet flush and compare the current time stamp to the previous time stamp. A difference of less than about 10 seconds to about 30 seconds may indicate multiple flushes. If it is determined that there were multiple flushes, method 800 returns to block 804. If instead, it is determined that there were not multiple flushes, method 800 proceeds to block 808.

At block 808, decrements the use count for the toilet flush. In various embodiments, the use count may be stored on controller 202. In various embodiments, the use count may be stored on toilet controller 208.

At block 810, controller 202 determines whether the use count is below a lower threshold. The lower threshold indicates a low number of toilet paper or toilet seat covers remaining and that one or both is to be refilled. If it is determined that the use count is above the lower threshold, method 800 returns to block 804. If instead, it is determined that the use count is below the lower threshold, method 800 proceeds to block 812.

At block 812, controller 202 sends a warning to cabin crew. In various embodiments, the warning provides an indication that the toilet paper or the toilet seat covers are ready to be refilled. In various embodiments, the warning may be presented as a light or a message send to a computer system. In various embodiments, controller 202 may continue to send the warning after each additional use until the system is reset, as described below.

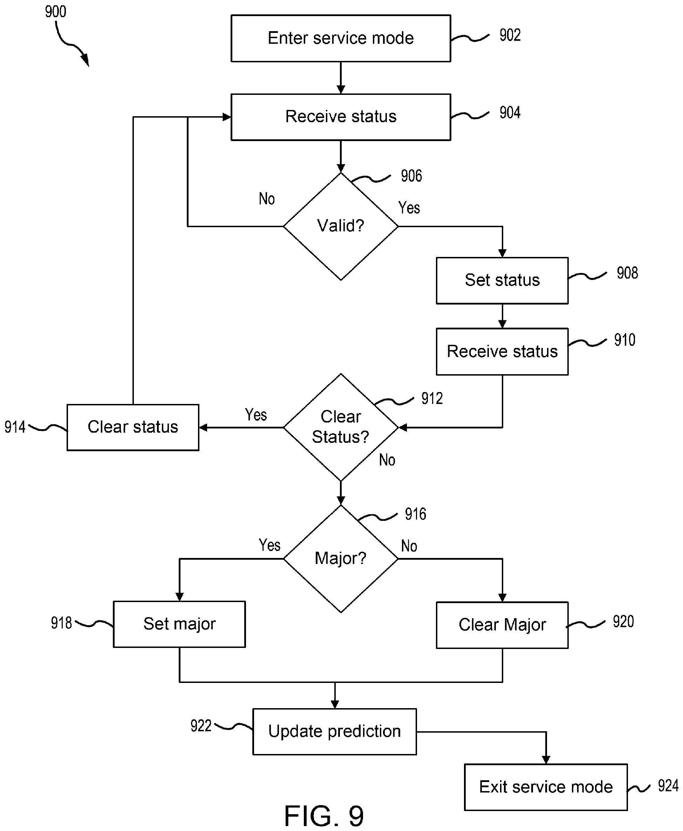

Referring now to FIG. 9, a method 900 for providing feedback to a prediction system, including correcting predictions, is illustrated, in accordance with various exemplary embodiments. In various embodiments, method 900 may be performed by central controller 202 described above in FIG. 2. In various embodiments, method 900 may be performed by one or more of soap dispenser controller 204, waste bin flap controller 206, toilet controller 208, and/or faucet controller 210 described above in FIG. 2.

At block 902, controller 202 enters services mode. In various embodiments, controller 202 may receive a signal from a aircraft server, a sensor, a button, or a series of motions, among others. In service mode, controller 202 does not activate any motors or actuators when in service mode and instead receives input from a motion sensor providing feedback to the prediction system.

At block 904, controller 202 receives a status feedback from a sensor (e.g., faucet sensor 224, toilet sensor 220, waste bin flap sensor 216, etc.). In various embodiments, the status is indicated by a motion pattern performed by the user with the motion sensor. For example, a first pattern is used to indicate that the status warning is early (e.g., plenty of supplies remain) and a second pattern is used to indicate the status warning is late (e.g., supplies are empty already). In various embodiments, each status may be indicated by a morse code style input where a dot is a motion followed by a one second gap and a dash is a motion followed by a two second gap. For example, the first status input may be dot-dash-dot-dot-dot-dash and the second status input may be dot-dash-dash-dot-dot-dot.

At block 906, controller 202 determines whether a valid status was received. A valid status may be one of the statuses described above. In various embodiments, there may multiple other valid status. If it is determined that a valid status was not received, method 900 returns to block 904. If instead, it is determined that a valid status was received, method 900 proceeds to block 908.

At block 908, controller 202 sets the status based on the received status. In various embodiments, this may be a first received status, or a late/early status. The first status indicates whether the predication, and subsequent warning, are too soon or too late.

At block 910, controller 202 receives a second status from the sensor. In various embodiments, the status is indicated by a motion pattern performed by the user with the motion sensor. For example, a third status is used to cancel a previously entered status, a fourth status is used to indicate a major correction to the prior status, and a fifth status is used to indicate the refill is complete and to reset the count. In various embodiments, each status may be indicated by a morse code style input where a dot is a motion followed by a one second gap and a dash is a motion followed by a two second gap. For example, the third status input may be dot-dot-dot-dot-dash, the fourth status input may be dot-dash-dot-dash-dot-dash, and the fifth status input may be dash-dash-dash-dot-dot-dot.

At decision block 912, controller 202 determines whether the second received status is the third status to cancel, or clear, the first status. If it is determined that the second received status is to clear the first received status, method 900 proceeds to block 914.

At block 914, controller 202 clears the first received status and returns to block 904 to receive the first received status again.

Returning to decision block 912, if instead, it is determined that the second received status is not to clear the first received status, method 900 proceeds to decision block 916.

At decision block 916, controller 202 determines whether the second received status indicates a major correction request. If it is determined that a major correction is requested, method 900 proceeds to block 918.

At block 918, controller 202 sets a flag to perform a major correction.

Returning to decision block 916, if instead it is determined that a major correction is not requested, method 900 proceeds to block 920.

At block 920, controller 202 clears the flag to perform the major correction.

At block 922, controller 202 updates the prediction for the current touchless lavatory system if a correction is requested. Updating the prediction includes increasing or decreasing the prediction based on the first received status. Updating the prediction further includes a larger increase or a larger decrease based on the second received status. If no correction is requested, method 900 proceeds to block 924.

At block 924, controller 202 exits service mode. In various embodiments, exiting service mode further includes resetting the count based on the updated prediction.

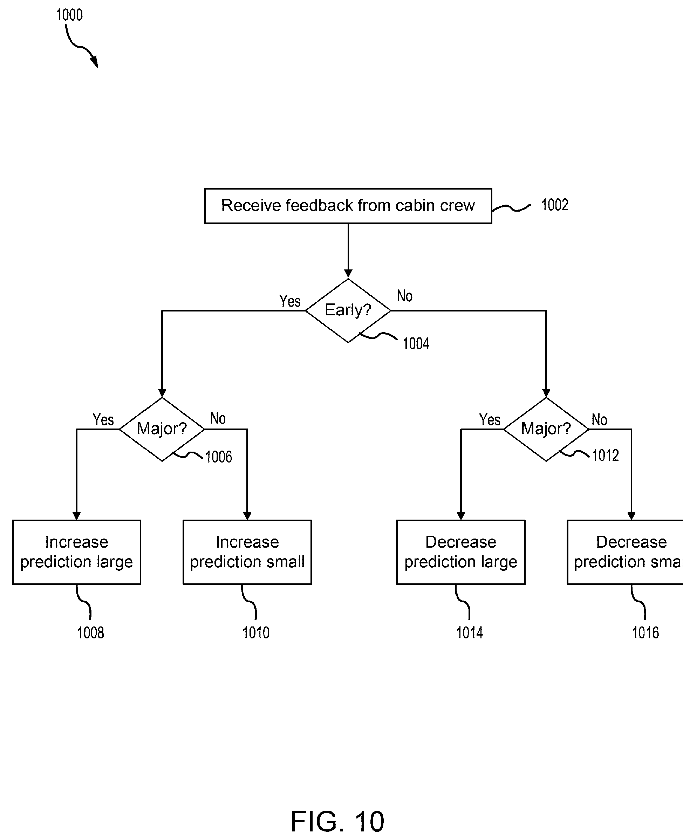

Referring now to FIG. 10, a method 1000 for correcting predictions for refilling lavatory consumables is illustrated, in accordance with various exemplary embodiments. In various embodiments, method 1000 may be performed by central controller 202 described above in FIG. 2. In various embodiments, method 1000 may be performed by one or more of soap dispenser controller 204, waste bin flap controller 206, toilet controller 208, and/or faucet controller 210 described above in FIG. 2.

At block 1002, controller 202 receives feedback from the cabin crew. In various embodiments, the feedback from the cabin crew may be entered using the sensors in the touchless lavatory (e.g., sensors 212, 216, 220, 224) as described in method 900 above in FIG. 9. In various embodiments, the feedback may be provided through a user interface (e.g., a dashboard) on a tablet or computer within the aircraft.

At decision block 1004, controller 202 determines whether the feedback indicates that the warning, as previously described, was early . In various embodiments, the feedback indicates that the warning is early, late, or accurate. Feedback that the warning was early indicates that the sufficient consumable supplies (e.g., toilet paper, soap, waste bin not full, etc.) remain to not warrant the attention of the cabin crew. Feedback that the warning was late indicates that the consumable supplies (e.g., toilet paper, soap, waste bin full, etc.) are depleted and/or that a passenger notified cabin crew that the consumable supplies are depleted. If it is determined that the feedback indicates that the warning was early, method 1000 proceeds to decision block 1006.

At decision block 1006, controller 202 determines whether the feedback indicates that the correction requested is major or minor. In various embodiments, a major correction is a request for a larger correction than a minor correction. If it is determined that the correction requested is a major correction, method 1000 proceeds to block 1008.

At block 1008, controller 202 increases the prediction by a large amount. That is, because the warning was early and a major correction is requested, indicating that the warning was very early, the prediction is increased by a large amount. In various embodiments, the large amount may be defined as an increase of about 10% to about 20%, and more specifically about 15%. That is, the predicted number of uses of a consumable (e.g., toilet paper, soap, etc.) is increased by the large amount.

Returning to decision block 1006, if instead, it is determined that correction requested is not a major correction, method 1000 proceeds to block 1010.

At block 1010, controller 202 increases the prediction by a normal amount. That is, because the prediction was early, but not very early, as indicated by a request for correction but not a major correction, the prediction is increased by a normal amount. In various embodiments, the normal amount may be about 2% to about 10%, and more specifically about 5%. That is, the predicted number of uses of a consumable (e.g., toilet paper, soap, etc.) is increased by the normal amount.

Returning to decision block 1004, if instead, it is determined that the feedback indicates that the warning was late, method 1000 proceeds to decision block 1012.

At decision block 1012, controller 202 determines whether the feedback indicates that the correction requested is major or minor. In various embodiments, a major correction is a request for a larger correction than a minor correction. If it is determined that the correction requested is a major correction, method 1000 proceeds to block 1014.

At block 1014, controller 202 decreases the prediction by a large amount. That is, because the warning was late and a major correction is requested, indicating that the warning was very late (e.g., passengers complained), the prediction is decreased by a large amount. In various embodiments, the large amount may be defined as an decrease of about 5% to about 20%, and more specifically about 10%. That is, the predicted number of uses of a consumable (e.g., toilet paper, soap, etc.) is decreased by the large amount.

Returning to decision block 1012, if instead, it is determined that correction requested is not a major correction, method 1000 proceeds to block 1016.

At block 1016, controller 202 decreases the prediction by a normal amount. That is, because the prediction was late, but not very late (e.g., empty or almost empty but no complaints), as indicated by a request for correction but not a major correction, the prediction is decreased by a normal amount. In various embodiments, the normal amount may be about 2% to about 10%, and more specifically about 5%. That is, the predicted number of uses of a consumable (e.g., toilet paper, soap, etc.) is decreased by the normal amount.

Accordingly, as described above, the prediction system of the touchless lavatory is able to be refined to more accurately predict when to replenish supplies in the touchless lavatory through feedback provided by the cabin crew. It should be appreciated that this process may be an iterative process that is refined over time and through use. In various embodiments, the predictions may become unique to different aircraft layouts, different flight routes, and/or different lavatories on the same aircraft, among other factors. This improves the efficiency of the cabin crew by reducing the number of physical inspections of the lavatories and improves the comfort of the passengers by reducing the instances of consumables being depleted.

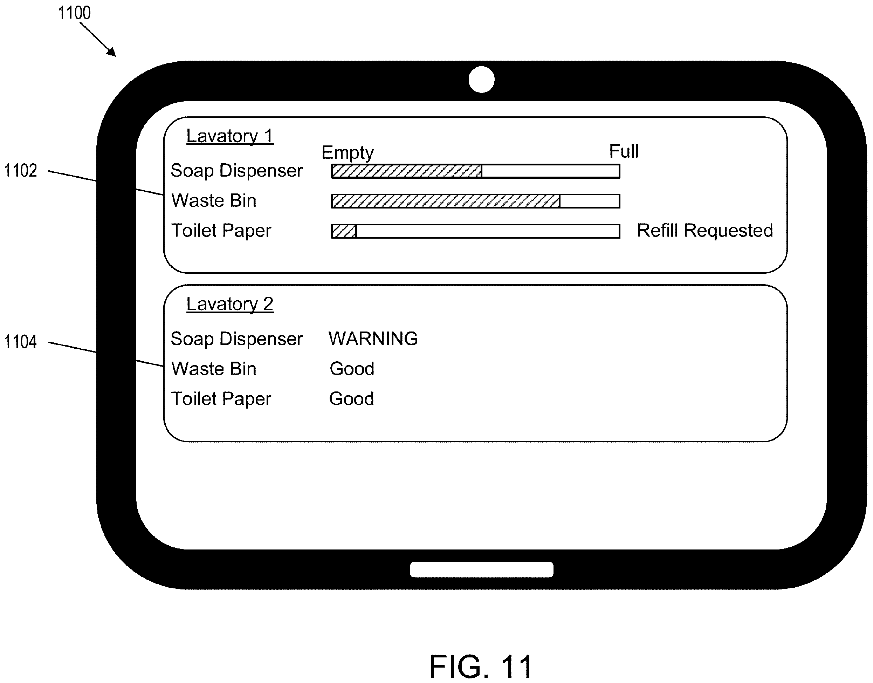

Referring now to FIG. 11, a user interface (UI) 1100 for displaying status of a touchless lavatory is illustrated, in accordance with various exemplary embodiments. In various embodiments, UI 1100 may be displayed on a tablet, a smart phone, a computer, or other device in the aircraft. UI 1100 includes a first status panel 1102 for a first lavatory and a second status panel 1104 for a secondary lavatory. UI 1100 as illustrated in FIG. 11 is not intended to limit the scope of this disclosure but to provide various embodiments for UI 1100 for discussion purposes. It should be understood that UI 1100 may use first status panel 1102, second status panel 1104, or other styles of status panels for displaying information related to the touchless lavatory.

First status panel 1102 illustrates the status of each system (i.e., soap dispenser, waste bin, and toilet paper) using bar graphs. The bar graphs provide a visual representation of the status of each system with "Empty" being on side and "Full" being on the opposite side. As illustrated, each bar graph includes hash marks indicating the status of each system. An additional status, "Refill Requested," is located adjacent the bar graph for the toilet paper. This status may be associated with the warnings previously described.

Second status panel 1104 provides a simplified indication of the status of each system (i.e., soap dispenser, waste bin, and toilet paper). As illustrated, second status panel 1104 provides a simple "Good" or "WARNING" label for each system. In various embodiments, "Good" means that there are sufficient supplies. In various embodiments, "WARNING" indicates a request to service the touchless lavatory. The "WARNING" status may be shown in response to a processor sending a warning as previously described.

## Claims

1. A method, comprising:
receiving, by a processor, a first sensor signal;
retrieving, by the processor, a first dispense time for a faucet in response to the first sensor signal being a request for water from the faucet;
activating, by the processor, the faucet to dispense water for the first dispense time; and **characterized by**
receiving, by the processor, a second sensor signal while the faucet is dispensing water;
determining, by the processor, that the faucet is active in response to the second sensor signal being a request for soap from a soap dispenser;
calculating, by the processor, a first frequency of the faucet being active when the second sensor signal is received; and
decreasing, by the processor, the first dispense time in response to the first frequency being above a first threshold, , wherein the first frequency is a measurement of multiple requests as a percentage of total requests over a predetermined number of uses, and wherein the first threshold is about 70% of the predetermined number of uses being multiple requests.

2. The method of claim 1, further comprising:
retrieving, by the processor, an amount of soap to dispense from the soap dispenser in response to the second sensor signal;
activating, by the processor, the soap dispenser to dispense the amount of soap;
receiving, by the processor, a third sensor signal indicating a request for soap from the soap dispenser;
calculating, by the processor, a second frequency of multiple requests for soap to total requests for soap; and
increasing, by the processor, the amount of soap to dispense in response to the second frequency being above a second threshold.

3. The method of claim 2, wherein multiple requests for soap includes a second request for soap being received within about 5 seconds of a first request for soap, and wherein the second frequency is a measurement of a number of multiple requests for soap as a percentage of total requests for soap over a predetermined number of uses, and wherein the second threshold is about 70% of the predetermined number of uses.

4. The method of any preceding claim, further comprising:
receiving, by the processor, a fourth sensor signal indicating a request for water, the fourth sensor signal received after the second sensor signal;
retrieving, by the processor, a second dispense time for the faucet;
activating, by the processor, the faucet to dispense water for the second dispense time;
receiving, by the processor, a fifth sensor signal indicating a request for water, the fifth sensor signal received after the fourth sensor signal;
calculating, by the processor, a third frequency of multiple requests for water in response to the fifth sensor signal being within a time threshold of the fourth sensor signal; and
increasing, by the processor, the second dispense time in response to the third frequency being above a third threshold, and optionally wherein the second dispense time is greater than the first dispense time.

## Patentansprüche

1. Verfahren, umfassend:
Empfangen eines ersten Sensorsignals durch einen Prozessor; Abrufen einer ersten Abgabezeit für einen Wasserhahn durch den Prozessor als Reaktion darauf, dass das erste Sensorsignal eine Anforderung von Wasser aus dem Wasserhahn ist;
Aktivieren des Wasserhahns durch den Prozessor, um Wasser für die erste Abgabezeit abzugeben; und **gekennzeichnet durch** Empfangen eines zweiten Sensorsignals durch den Prozessor, während der Wasserhahn Wasser abgibt;
Bestimmen, dass der Wasserhahn aktiv ist, durch den Prozessor als Reaktion darauf, dass das zweite Sensorsignal eine Anforderung von Seife aus einem Seifenspender ist;
Berechnen einer ersten Häufigkeit, dass der Wasserhahns aktiv ist, durch den Prozessor, wenn das zweite Sensorsignal empfangen wird; und
Verringern der ersten Abgabezeit durch den Prozessor als Reaktion darauf, dass die erste Häufigkeit über einem ersten Schwellenwert liegt, wobei die erste Häufigkeit eine Messung von Mehrfachanforderungen als Prozentsatz der Gesamtanforderungen über eine vorbestimmte Anzahl von Verwendungen ist und wobei der erste Schwellenwert etwa 70 % der vorbestimmten Anzahl von Verwendungen beträgt, die Mehrfachanforderungen sind.

2. Verfahren nach Anspruch 1, ferner umfassend:
Abrufen einer aus dem Seifenspender auszugebenden Seifenmenge durch den Prozessor als Reaktion auf das zweite Sensorsignal; Aktivieren des Seifenspenders durch den Prozessor, um die Seifenmenge abzugeben;
Empfangen eines dritten Sensorsignals durch den Prozessor, das eine Anforderung von Seife aus dem Seifenspender angibt;
Berechnen einer zweiten Häufigkeit von Mehrfachanforderungen von Seife im Verhältnis zu den Gesamtanforderungen von Seife durch den Prozessor; und
Erhöhen der auszugebenden Seifenmenge durch den Prozessor als Reaktion darauf, dass die zweite Häufigkeit über einem zweiten Schwellenwert liegt.

3. Verfahren nach Anspruch 2, wobei Mehrfachanforderungen von Seife eine zweite Anforderung von Seife beinhalten, die innerhalb von etwa 5 Sekunden nach einer ersten Anforderung von Seife empfangen wird, und wobei die zweite Häufigkeit eine Messung einer Anzahl von Mehrfachanforderungen von Seife als Prozentsatz der Gesamtanforderungen von Seife über eine vorbestimmte Anzahl von Verwendungen ist, und wobei der zweite Schwellenwert etwa 70 % der vorbestimmten Anzahl von Verwendungen beträgt.

4. Verfahren nach einem der vorhergehenden Ansprüche, ferner umfassend:
Empfangen eines vierten Sensorsignals, das eine Anforderung von Wasser angibt, durch den Prozessor, wobei das vierte Sensorsignal nach dem zweiten Sensorsignal empfangen wird; Abrufen einer zweiten Abgabezeit für den Wasserhahn durch den Prozessor;
Aktivieren des Wasserhahns durch den Prozessor, um Wasser für die zweite Abgabezeit abzugeben;
Empfangen eines fünften Sensorsignals, das eine Anforderung von Wasser angibt, durch den Prozessor, wobei das fünfte Sensorsignal nach dem vierten Sensorsignal empfangen wird; Berechnen einer dritten Häufigkeit von Mehrfachanforderungen von Wasser durch den Prozessor als Reaktion darauf, dass das fünfte Sensorsignal innerhalb eines Zeitschwellenwerts des vierten Sensorsignals liegt; und
Erhöhen der zweiten Abgabezeit durch den Prozessor als Reaktion darauf, dass die dritte Häufigkeit über einem dritten Schwellenwert liegt, und wobei optional die zweite Abgabezeit größer ist als die erste Abgabezeit.

## Revendications

1. Procédé, comprenant :
la réception, par un processeur, d'un premier signal de capteur ;
la récupération, par le processeur, d'un premier temps de distribution pour un robinet en réponse au premier signal de capteur qui est une demande d'eau provenant du robinet ; l'activation, par le processeur, du robinet pour distribuer de l'eau au cours du premier temps de distribution ; et **caractérisé par**
la réception, par le processeur, d'un deuxième signal de capteur pendant que le robinet distribue de l'eau ;
la détermination, par le processeur, du fait que le robinet est actif en réponse au deuxième signal de capteur qui est une demande de savon provenant d'un distributeur de savon ;
le calcul, par le processeur, d'une première fréquence d'activité du robinet lors de la réception du deuxième signal de capteur ; et
la réduction, par le processeur, du premier temps de distribution en réponse à la première fréquence dépassant un premier seuil, dans lequel la première fréquence est une mesure de demandes multiples en pourcentage du nombre total de demandes sur un nombre prédéterminé d'utilisations, et dans lequel le premier seuil est d'environ 70 % du nombre prédéterminé d'utilisations étant des demandes multiples.

2. Procédé selon la revendication 1, comprenant en outre :
la récupération, par le processeur, d'une quantité de savon à distribuer par le distributeur de savon en réponse au deuxième signal de capteur ;
l'activation, par le processeur, du distributeur de savon pour distribuer la quantité de savon ;
la réception, par le processeur, d'un troisième signal de capteur indiquant une demande de savon provenant du distributeur de savon ;
le calcul, par le processeur, d'une deuxième fréquence de demandes multiples de savon par rapport au nombre total de demandes de savon ; et
l'augmentation, par le processeur, de la quantité de savon à distribuer en réponse au fait que la deuxième fréquence dépasse un deuxième seuil.

3. Procédé selon la revendication 2, dans lequel les demandes multiples de savon comportent une seconde demande de savon reçue sous environ 5 secondes après une première demande de savon, et dans lequel la deuxième fréquence est une mesure d'un nombre de demandes multiples de savon en pourcentage du nombre total de demandes de savon sur un nombre prédéterminé d'utilisations, et dans lequel le deuxième seuil est d'environ 70 % du nombre prédéterminé d'utilisations.

4. Procédé selon une quelconque revendication précédente, comprenant en outre :
la réception, par le processeur, d'un quatrième signal de capteur indiquant une demande d'eau, le quatrième signal de capteur étant reçu après le deuxième signal de capteur ;
la récupération, par le processeur, d'un second temps de distribution pour le robinet ;
l'activation, par le processeur, du robinet pour distribuer de l'eau au cours du second temps de distribution ;
la réception, par le processeur, d'un cinquième signal de capteur indiquant une demande d'eau, le cinquième signal de capteur étant reçu après le quatrième signal de capteur ;
le calcul, par le processeur, d'une troisième fréquence de demandes multiples d'eau en réponse au fait que le cinquième signal de capteur se situe dans un seuil temporel par rapport au quatrième signal de capteur ; et
l'augmentation, par le processeur, du second temps de distribution en réponse à la troisième fréquence dépassant un troisième seuil, et éventuellement dans lequel le second temps de distribution est supérieur au premier temps de distribution.
